# EUROPEAN PATENT APPLICATION

(11) **EP 2 599 827 A1**
(43) Date of publication of application: **05.06.2013**
(21) Application number: 12193727.0
(22) Date of filing: 22.11.2012
(51) Int. Cl.: C08L 1/12, C08K 5/103

(54) **Biodegradable plastic material based on cellulose acetate and relative end-products**

(30) Priority: 30.11.2011 IT MI20112181
(71) Applicant: La-Es Laminati Estrusi Termoplastici S.p.a., 22070 Beregazzo Con Figliaro (CO) (IT)
(72) Inventor: Conterno, Cosimo, 6850 Mendrisio (CH)
(74) Representative: Giuli, Maurizio Mario Galdino

(57) **Abstract**

A process is described for the production of a plastic material based on cellulose acetate, said process comprising a plasticization phase of cellulose acetate by mixing the cellulose acetate flake or powder with a mixture of plasticizers comprising at least two plasticizers chosen among esters of glycerine, esters of citric acid and esters of tartaric acid, maintaining the temperature in the plasticization phase below 50°C.

## Description

The present invention relates to a process for the production of a biodegradable plastic material based on cellulose acetate and the relative end-products.

Cellulose acetate is a plastic material obtained by acetylation of the cellulose of a natural origin that has been used for decades for the production of fashion accessories, hair ornaments, buttons and above all eyeglass frames.

There are many reasons for the success of cellulose acetate in the production of this type of product: in particular, its pleasant feel and bright colours, that fashion designers and stylists have translated into numerous aesthetic and colour effects. These characteristics make it an extremely versatile material of great interest in a field in which taste and style are continuously and rapidly changing and evolving.

At present however, together with attention for a product that is always "up-to-date and fashionable", the search for new products and modifications of traditional products must also take into consideration all problems associated with protection of the environment, such as for example, problems linked to the disposal of the end-products, compatibility and non-toxicity of the materials.

Traditional plastic materials based on cellulose acetate are consequently also being studied for an evolution towards products which are aesthetically more interesting but at the same time "compatible", as they are observant of environmental protection, are non-toxic, economically more profitable thanks to higher technical performances, and at the same time have enhanced aesthetical properties which are fundamental for the type of end-products in which they are applied.

Plastic materials based on cellulose acetate have been on the market for over 80 years. Cellulose acetate, obtained from materials such as cotton linters and wood cellulose, is generally obtained in the form of powder or flakes.

In particular, in order to obtain granules, the cellulose acetate flake or powder must be subjected to a plasticization process in the presence of suitable plasticizers and possible further additives.

It is evident that both the type of cellulose acetate and the choice of additives substantially influence the production of a biodegradable, compatible, non-toxic end-product.

It is known, for example, that cellulose acetates that have an acetyl substitution degree of 2.2 or less, are biodegradable in the soil and in a sea environment and are also compostable. Higher acetyl substitution values lead to less biodegradable products. Other important factors for ensuring that the product is biodegradable and which influence the biodegradation rate are the type and quantity of plasticizer, in addition to possible residues deriving from the preparation reaction of cellulose acetate.

Stabilizing and plasticizing additives, for example, such as diethylphthalate (DEP), traditionally used in the production of cellulose acetate granules and sheets, release, in the degradation phase, substances that cannot be easily biodegraded, such as phthalic acid. Other more widely-used plasticizers for their flame-retardant properties such as triphenylphosphate or diphenylcresylphosphate allow a good plasticization, but are substances that can release phenol, both during processing and during a possible degradation process of the end-product. According to the provisions of EC 1272/2008, phenol is classified as a toxic substance, harmful in the case of prolonged contact with the skin and mutagenic of group 3.

A further element that should be taken into account is that although producers of end-products, such as eye-glasses, take into due consideration all problems associated with protection of the environment, such as problems linked to the disposal of end-products, compatibility and non-toxicity of the raw materials indicated, they are in any case reluctant to modify the parameters and processing processes of plastic materials, that have been consolidated over the years.

It is consequently extremely important to find products and processes that not only enhance the performances and compostability, but also guarantee the characteristics that allow traditional processing processes to be applied, thus maintaining the flexural modulus and Tg values of the material within values very similar to those of traditional materials.

The Applicant has surprisingly found that the process for the production of plastic material based on cellulose acetate according to the present invention overcomes the drawbacks described above.

In particular, the plastic material based on cellulose acetate according to the present invention allows biodegradable/ecocompatible plastic materials based on cellulose acetate to be obtained, maintaining and/or enhancing the aesthetical properties, dimensional stability, compatibility of said plastic material with polycarbonate, essential for application in the optician field, allowing the use of all types of lenses and material, also PC, contrary to what is the case with applications using traditional formulations of acetate for eye-glasses.

An object of the present invention therefore relates to a process for the production of a plastic material based on cellulose acetate, said process being characterized by comprising a plasticization phase of cellulose acetate by mixing the cellulose acetate flake or powder with a mixture of plasticizers consisting of at least two plasticizers selected from esters of glycerine, esters of citric acid and esters of tartaric acid, maintaining the temperature in the plasticization phase below 50°C.

The flake is then suitably plasticized to allow its processing and consequently confer the mechanical characteristics of the end-product.

The subsequent transformation of the plasticized flake into semi-processed or end-products (sheets) can be effected according to the following processing processes:
- WET BLOCK: this is the oldest processing process of cellulose acetate and nitrocellulose. Contrary to extrusion processes where the material is melted to bring it to the plastic state, in the wet block process, the same state is reached with the use of solvents.

The innovative technology, object of the present invention, together with the formulations indicated, can be applied to the "Wet block", as well as to the process:
- HOT EXTRUSION;
- COMPRESSION MOULDING
- INJECTION MOULDING

The process according to the present invention therefore comprises the following characterizing phase:
- a plasticization phase of the cellulose acetate flake carried out in plough mixers with a cooling jacket to keep the temperature increase generated by the friction between the various components of the formulation and due to the exothermic reaction that takes place during the plasticization phase, under control (below 54°C). This thermal efficiency avoids the solvent action generated by the heating of the plasticized products contained in the mixture.

During the plasticization phase, moreover, it is presumed that the hydrogen bond between the cellulose acetate molecules is substituted by the same bond between the molecules of the mixture of plasticizers and cellulose acetate. The energy balance of this process is slightly exothermic.

The plasticization phase is then followed by
- an extrusion phase of the plastic material coming from the plasticization phase to produce granules; the extrusion phase(s) of the granule is/are carried out at temperatures ranging from 150 to 200°C;
- a moulding phase of the granules to obtain an end-product; the moulding phases of the granules for the production of moulded end-products are carried out at temperatures ranging from 160 to 220°C;
- an extrusion phase or a production phase according to the Compression moulding process for producing a semi-processed product such as a sheet.

The extrusion phases of the sheets starting from granules are carried out at temperatures ranging from 150 to 200°C.

Examples of esters forming the mixtures of plasticizers are: triacetin monolactate, glycerol tribenzoate, triethyl citrate, tributyl citrate, butyl tartrate, acetyltriethyl citrate, glycerol diacetate and glycerol triacetate.

The mixture of plasticizers preferably comprises acetic esters of glycerol and more preferably acetyl triethyl citrate (ATEC), glycerol triacetate (GTA), glycerol diacetate (GDA) and low-molecular-weight (<5000) polyester based on adipic acid.

In a preferred embodiment, the mixture of plasticizers is a binary mixture wherein the plasticizers are an acetic ester of glycerol mixed with an ester of citric acid or an ester of tartaric acid, preferably a mixture of an acetic ester of glycerol and an ester of citric acid, even more preferably a mixture of acetyl triethyl citrate (ATEC) and glycerol triacetate (GTA).

The binary mixture of plasticizers is preferably a mixture of plasticizers in a weight ratio of 1:1, even more preferably a mixture of acetyl triethyl citrate (ATEC) and glycerol triacetate (GTA) in a weight ratio of 1:1.

In particular, the plasticization phase comprises mixing a quantity ranging from 60% to 90% by weight of cellulose acetate having a molecular weight (MW) ranging from 40,000 to 65,000 with a quantity ranging from 10% to 40% by weight of mixture of plasticizers, preferably in a quantity ranging from 20% to 40% by weight of mixture of plasticizers with respect to the total weight of the mixture of acetate and plasticizers.

The molecular weight (MW) is measured by means of Gel Permeation Chromatography (GPC) according to an internal method.

The plasticization phase is carried out for a time ranging from 5 to 20 minutes.

The following additives are preferably added in the plasticization phase:
- process stabilizing additives;
- UV-radiation stabilizing additives;
- IR-absorber additives (infrared rays), preferably based on phthalocyanine with a maximum IR radiation absorption at 920 nm;
- additives for obtaining photochromatic effects;
- additives for producing markings, graphic effects with laser ray application;
- aromatization additives;
- suitable binding and compatibilizing additives for using ground or crushed wood-pulp discards, preferably obtained from processing waste of the wood industry, i.e. without the felling of trees and free of polluting additives of the carpentry industry.

Depending on the plasticization degree which ranges from a minimum of 10% to a maximum of 40%, the extruded granules have Tg (Glass transition temperature) values ranging from 100 to 150°C (revealed with TMA analysis), Flexural Elastic Modulus values (measured according to the standard ASTM D-790) ranging from 3,000 to 1,000 MPa, notched Izod impact strength (measured according to the standard ASTM D-256) ranging from 30 to 150 J/m and a Rockwell surface hardness Scale R (measured according to the standard ASTM D-785) ranging from a minimum of 140 to 70.

Thanks to the various plasticization degrees, various types of granules can be obtained, from which, depending on the production technology subsequently applied, the following products are obtained: extruded sheets, sheets produced with Compression Moulding "Wet Block" processes or moulded articles.

All of the above physico-mechanical characteristics, the biodegradability properties and characterizations due to the single additions, which can also be used in a combination, are kept and made constant by the above-mentioned plasticization process.

If, as a result of the heat developed by the exothermic reaction during the plasticization phase, the temperature in said phase should reach temperatures higher than 50°C, there would be a so-called solvent action: the cellulose acetate flake would dissolve, with the consequent formation of agglomerates (similar to balls) with non-homogeneous concentrations of plasticizer.

This effect would then also have negative consequences in subsequent processing processes, jeopardizing the physico-mechanical characteristics of the end-product.

If, on the contrary, the exothermic reaction that develops is thermally controlled, it allows a better plasticization of the flake, a greater homogeneity of the plasticized blend with the formation of hydrogen bonds between the carbonyl of the plasticizers and the free hydroxyl of the cellulose acetate and consequently a better extrusion of the granule.

The subsequent processing phases such as extrusion of the sheets and components for press processing are also facilitated.

The particular combination of the mixture of plasticizers and specific mixing conditions used in the plasticization phase therefore allow an end-product to be obtained (for example a sheet) which can be much more easily processed with respect to milling, bending, folding, tumbling and polishing in the production cycle of the end-product, for example eye-glasses.

By effecting the plasticization phase with a particular mixture of plasticizers and under specific conditions, an end-product is obtained, which has particularly high physico-mechanical characteristics in particular suitable for example in the field of the eyewear.

The process according to the present invention is of particular interest as it not only allows end-products to be obtained with particularly important physico-mechanical characteristics, but also allows the production of end-products that comply with increasingly strict international regulations relating to the protection of health and the environment.

In particular, the product obtained with the process according to the present invention is characterized by the following advantages: it is ecological and biodegradable and therefore more ecocompatible, complying with international regulations relating to these aspects, it does not contain phthalates and does not release phenol during the plasticization process and during a possible degradation, it is characterized by a particular surface gloss, it is odourless, hypoallergenic, stable to the migration of dyes, has an excellent processability and compatibility with other polymers and/or materials, for example with polycarbonate.

A further object of the present invention also relates to end-products obtained with the process according to the present invention, i.e. sheets for the production of various types of end-products, such as fashion accessories, hair ornaments, buttons, eye-glass frames and components, preferably eye-glass frames and components.

In this application form, i.e. in the production of eye-glass frames and components, the compatibility of the plastic material according to the present invention which allows the fitting of polycarbonate lenses, is particularly advantageous, avoiding cracking phenomena of the polycarbonate lenses, typical of cellulose acetate produced according to traditional formulations.

The frames obtained from sheets produced with the process according to the present invention, in fact, allow the use of lenses made of PC and other materials such as PMMA, also in this case complying with the provisions of the standard ISO177-198 and passing all the reference tests of the standard ISO-12870.

The material has the further advantage of being extremely stable from a dimensional point of view. Furthermore, the material obtained with the process according to the present invention can be declared as being a phthalate-free product. The presence of a polyester in the mixture of plasticizers also allows a more stable end-product to be obtained; by limiting the migration of the plasticizer inside the polymeric mass, in fact, the surfacing of dyes, even dyes which are less stable and more soluble in the same plasticizers, is avoided.

Thanks to this limited migration of plasticizers and other components with respect to a traditional cellulose acetate, the end-product is ameliorative for applications in contact with the skin and can therefore be defined as hypoallergenic.

The presence of IR-absorber additives in the plasticization phase allows a shorter and more economical processing cycle of the end-product, in particular of the eyeglass frame or component, representing a significant advantage as it reduces the processing times.

The folding of eyeglass frames or the thermoforming of eyeglass components and/or sheets is effected in shorter times: thanks to the increased IR-radiation absorbance, in fact, the material is uniformly heated reaching the ideal processing temperature (Tg 90°C - 150°C) in a shorter time with respect to the times necessary with traditional materials. In the case of eyeglasses, effecting the folding and bending at the correct temperature is fundamental for guaranteeing the best dimensional stability of the finished eyeglass with time.

In particular, the use of the mixture of plasticizers according to the present invention has surprisingly allowed a process to be effected, which not only avoids or solves packing phenomena, i.e. aggregation in blocks, in charging the acetate flake into the extruder, but also allows an end-material to be obtained, with the necessary flexural modulus and Tg values.

The use of single plasticizers, as described in patent application CN 201010585065.9, on the contrary, does not allow end-products to be obtained with the desired characteristics.

The end-product obtained with the process according to the present invention also has the significant advantage of being a product which is 100% biodegradable (with reference to the standard ISO 14855/2). The specific combination of plasticizers, in fact, used in the plasticization phase of the process according to the present invention, allows a simpler and more rapid biodegradability process with respect to traditional products. The plasticizer used in the process according to the present invention is partially soluble in water and this allows a more rapid loss of plasticizer from the polymeric mass, generating degradation processes more rapidly. A further advantage related to the biodegradability of the end-product obtained with the process according to the present invention is evident specially for the producer of the article who can convey eventually processing waste non reusable directly to the composting instead of the collection of special waste.

The following examples are provided for purely illustrative and non-limiting purposes of the present invention for a better understanding of the same.

### EXAMPLES 1a)-1d):

Phase 1: formation of a plasticized blend and relative addition of additives:
   The following additives were added to the blend composed of a mixture of plasticizers consisting of 15% by weight of acetyl triethyl citrate (ATEC) and 15% by weight of glycerol triacetate (GTA) and cellulose acetate in a quantity equal to 70% by weight in Examples 1a) and 1c), 69.5% by weight in Example 1b) and 60% by weight in Example 1d) has been additivated as follows:
      Example 1a) addition with substances for obtaining photochromatic effects based on oxazine in a quantity equal to 0.2 phr by weight;
      Example 1b) addition with substances based on a special mica treated externally with a particular coating for producing markings, graphic effects with the application of laser rays, introduced in a quantity equal to 0.5% by weight;
      Example 1c) addition with natural aromatizing substances (mixtures of terpenes, ketones and alcohols, etc.) soluble in an alcohol base, introduced in a concentration in thousandths of a gram in relation to the desired aroma;
      Example 1d) addition of a quantity equal to 10% by weight of wood-pulp discards of ground or crushed wood. The wood thus added is compatibilized with a binder based on polyester with phosphoric groups in a quantity equal to 0.5% by weight with respect to the total quantity of additive.
      The mixing of the formulations according to Examples 1a)-1d) was carried out for 15 minutes, with a maximum temperature controlled at 45°C.
Phase 2 common for all the examples: extrusion of the plasticized blend obtained at the end of phase 1 for producing the granule: the extrusion process was carried out with temperatures ranging from 170 to 200°C in relation to the plasticization degree: in particular, the plastic material coming from phase 1 is extruded at a temperature of 185°C +/-5°C with respect to the screw and cylinder of the extruder and a temperature of about 190°C of the extrusion head.
Phase 3: production of semi-processed products such as: 3i) extruded sheets with processing processes ranging from 170 to 200°C, in relation to the plasticizer introduced; in the case of the present example, the extrusion is carried out at a temperature of 185°C per the cylinder and screw and a temperature at the head of 195°C.
   3ii) sheets produced with the Compression Moulding process;
   3iii) sheets produced with the Wet Block process;
   3iv) production of moulded articles with the Injection Moulding process .

The characteristics obtained with a product produced from a base formulation of the type described in Examples 1a)-1c), i.e. with cellulose acetate 70% by weight and plasticizer mix (GTA-ATEC) 30% by weight, are the following:
Fluidity value: MFI value at 190°C-10 kg from 22 to 28; Yellow index value: about 4;
Flexural modulus equal to about 1700 and 1900 MPa.

### EXAMPLE 2

An end-product was prepared with a process completely analogous to that described for Examples 1a) to 1d), starting from the following composition:
15.5% by weight of acetyl triethyl citrate (ATEC);
15.5% by weight of glycerol triacetate (GTA);
68.55% by weight of cellulose acetate, with the following addition:

| | |
|---|---|
| Stabilizer antioxidant IRGANOX 1076 | 0.07% |
| stabilizer epoxidized soybean oil ESONACH | 0.20% |
| citric acid | 0.03% |
| IRGANOX B900 -mixture of antioxidant and organic phosphite | 0.15% |

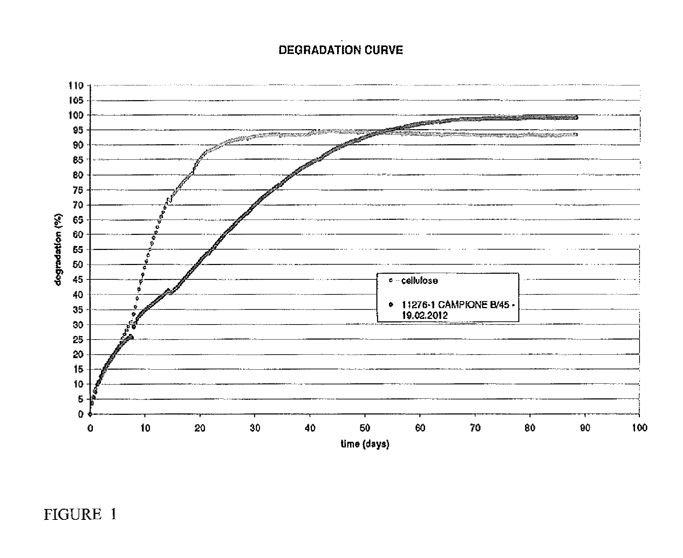

The end-product thus obtained was tested to verify its biodegradability and the data obtained showed that the product is completely biodegradable (see Figure 1, sample Laes B/45)).

In particular, the biodegradability test was carried out according to the standard ISO 14855 of 2005 (Determination of the ultimate aerobic biodegradability of plastic materials under controller composting condition method by analysis of evolved carbon dioxide) and the end-product according to the present invention proved to be 97% compostable in 90 days.

### EXAMPLE 3

In order to demonstrate that the use of the plasticizer mix according to the present invention allows a surprisingly ameliorative end-product to be obtained with respect to both the state of the art that uses diethylphthalate (DEP) and also the state of the art that uses a single plasticizer acetyl triethyl citrate (ATEC) or glycerol triacetate (GTA), end-products were prepared, according to the procedure described in Example 1a), only modifying the type and quantity of plasticizer used.

The data indicated in Table 1 below show that the two plasticizers, if used individually, as described in the prior art, modify some of the thermal properties of the acetate compound differently with respect to the traditional formulation with DEP.

For example, by using DEP as plasticizer, is obtained a TG of about 110°C of the acetate compound, that is the TG necessary for the successive thermal working of the glasses, with a quantity of DEP of about 45 parts by weight. To obtain the same value of TG of the acetate compound, are instead necessary 59 parts by weight of acetyl triethyl citrate when used individually, or 37 parts by weight of glycerol triacetate, when used individually.

Such a different quantity of plasticizer with respect to the traditional formulation, however, would have significant consequences on the mechanical properties of the end-product.

The particular mixture of plasticizers according to the present invention surprisingly allows both the extrusion and subsequent processing of the semi-processed product to be carried out extremely effectively, with an excellent processability and, at the same time, obtaining particularly significant biodegradability characteristics, as indicated in the previous Example 2.

**Table 1**

| Plasticizer (pp) | Flexural modulus (MPa) | Tg (°C) |
|---|---|---|
| DEP 30pp | 2600 | 126 |
| DEP 37pp | 2000 | 118 |
| DEP 45pp | 1650 | 110 |
| GTA 30pp | 2300 | 123.5 |
| GTA 37pp | 2037 | 112 |
| GTA 45pp | 1737 | 100 |
| ATEC 30pp | 3120 | 132 |
| ATEC 37pp | 2421 | 126 |
| ATEC 45pp | 1960 | 120 |
| GTA + ATEC 30pp | 3100 | 134.5 |
| GTA + ATEC 37pp | 2210 | 121.3 |
| GTA + ATEC 45pp | 1788 | 110.2 |

The end-product according to the present invention therefore has improved characteristics with respect to the products of the state of the art, not only in terms of biodegradability, but also with respect to the yield to end-product which is less fragile than that obtained with the plasticizers of the state of the art, at the same time maintaining the already consolidated plastic processing parameters and processes.

## Claims

1. A process for the production of a plastic material based on cellulose acetate, said process being **characterized in that** it comprises a plasticization phase of cellulose acetate by mixing the cellulose acetate flake or powder with a mixture of plasticizers consisting of at least two plasticizers selected from esters of glycerine, esters of citric acid and esters of tartaric acid, maintaining the temperature in the plasticization phase below 50°C.

2. The process according to claim 1, **characterized in that** it also comprises:
- an extrusion phase of the plastic material coming from the plasticization phase for producing granules, said extrusion phase(s) of the granule being carried out at temperatures ranging from 150 to 200°C;
- a moulding phase of the granules to obtain an end-product; said moulding phases of the granules for the production of moulded end-products being carried out at temperatures ranging from 160 to 220°C;
- an extrusion phase or a production phase according to the Compression moulding process or of "Wet Block" for producing a semi-processed product such as a sheet.

3. The process according to any of the previous claims, **characterized in that** the mixture of plasticizers is composed of at least two plasticizers selected from triacetin monolactate, glycerol tribenzoate, triethyl citrate, tributyl citrate, butyl tartrate, acetyltriethyl citrate, glycerol diacetate and glycerol triacetate and/or mixtures thereof.

4. The process according to any of the claims 1-3, **characterized in that** the mixture of plasticizers comprises acetic esters of glycerol, more preferably acetyl triethyl citrate (ATEC), glycerol triacetate (GTA), glycerol diacetate (GDA) and low-molecular-weight (<5000) polyester based on adipic acid.

5. The process according to any of the previous claims, **characterized in that** the mixture of plasticizers is a binary mixture wherein the plasticizers are an acetic ester of glycerol mixed with an ester of citric acid or an ester of tartaric acid, preferably a mixture of an acetic ester of glycerol and an ester of citric acid.

6. The process according to any of the previous claims, **characterized in that** the mixture of plasticizers is a binary mixture wherein the plasticizers are acetyl triethyl citrate (ATEC), glycerol triacetate (GTA).

7. The process according to any of the previous claims, **characterized in that** the mixture of plasticizers is a binary mixture wherein the plasticizers are in a weight ratio of 1:1.

8. The process according to any of the previous claims, **characterized in that** the plasticization phase comprising mixing a quantity ranging from 60% to 90% by weight of cellulose acetate having a molecular weight ranging from 40,000 to 65,000 with a quantity ranging from 10% to 40% by weight of mixture of plasticizers, preferably from 20% to 40% by weight with respect to the total weight of the mixture of acetate and plasticizers.

9. The process according to any of the previous claims, **characterized in that** the following additives are added in the plasticization phase:
- process stabilizing additives;
- UV-radiation stabilizing additives;
- IR-absorber additives, preferably based on phthalocyanine (infrared rays) with a maximum IR radiation absorption at 920 nm;
- additives for obtaining photochromatic effects;
- additives for producing markings, graphic effects with laser ray application;
- aromatization additives;
- suitable binding and compatibilizing additives for using ground or crushed wood-pulp discards, preferably obtained from processing waste of the wood industry, i.e. without the felling of trees and free of polluting additives of the carpentry industry.

10. The process according to any of the previous claims, **characterized in that** the plasticization phase is carried out for a time ranging from 5 to 20 minutes.

11. End-products obtained with the process according to claims 1 and 2.

12. End-products obtained with the process according to claims 1 and 2 and any of the claims 3-10.

13. End-products according to claim 11 or 12 such as fashion accessories, hair ornaments, buttons, eye-glass frames and components, preferably eye-glass frames and components.
